(19) Europäisches Patentamt
European Patent Office
Office européen des brevets

(11) EP 2 136 645 B1

(12) # EUROPEAN PATENT SPECIFICATION

(45) Date of publication and mention of the grant of the patent:
**19.06.2013 Bulletin 2013/25**

(21) Application number: **08736016.0**

(22) Date of filing: **09.04.2008**

(51) Int Cl.:
***A01N 59/16*** *(2006.01)* ***A01N 25/10*** *(2006.01)*
***A01N 25/08*** *(2006.01)* ***A01P 1/00*** *(2006.01)*
***C08K 3/08*** *(2006.01)* ***C09D 5/14*** *(2006.01)*
***D06M 11/83*** *(2006.01)* ***D01F 1/10*** *(2006.01)*
***A61L 31/02*** *(2006.01)*

(86) International application number:
**PCT/EP2008/054291**

(87) International publication number:
**WO 2008/128896 (30.10.2008 Gazette 2008/44)**

(54) **ANTIMICROBIAL PLASTICS AND COATINGS**
ANTIMIKROBIELLE KUNSTSTOFFE UND BESCHICHTUNGEN
PLASTIQUES ET REVÊTEMENTS ANTIMICROBIENS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.04.2007 EP 07106382**

(43) Date of publication of application:
**30.12.2009 Bulletin 2009/53**

(73) Proprietor: **BASF SE**
**67056 Ludwigshafen (DE)**

(72) Inventors:
- **PREUSS, Andrea**
  **CH-4600 Olten (CH)**
- **STODDEN, Barbara**
  **83278 Traunstein (DE)**
- **PETER, Wolfgang**
  **79395 Neuenburg Am Rhein (DE)**
- **LIN, I-Chyang**
  **Spring Valley, NY 10977 (US)**

(56) References cited:
**US-A- 4 775 585** **US-A- 5 049 139**
**US-A- 5 730 995** **US-A1- 2005 233 888**
**US-A1- 2006 134 313** **US-B2- 6 822 034**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention is aimed at antimicrobial polymers and coatings compositions, for example compositions for medical applications. The polymers and coatings are provided outstanding antimicrobial activity via the incorporation of a combination of elemental silver and silver supported on a zeolite or a glass.

Background

Zeolite supported silver is disclosed in U.S. Pat. Nos. 4,775,585; 4,911,898; 4,911,899 and 6,071,542.
Zeolite supported silver is also taught in U.S. Pat. No. 6,585,989.
Glass supported silver is disclosed for example in published U.S. app. No. 2005/0233888.
Antibacterial plastic products are taught for example in published U.S. app. No. 2006/0134313. U.S. Pat. No. 6,822,034 teaches antimicrobial silicone rubber. U.S. Pat. No. 6,984,392 teaches antimicrobial silver metal. U.S. Pat. No. 5,049,139 discloses some medical devices containing a part designed for fluid contact, which consists of silver impregnated glass. U.S. Pat. No. 5,730,995 discloses some antibacterial colloids comprising certain inorganic oxides and silver.
Surprisingly, polymers or coatings that have incorporated therein a combination of elemental silver and zeolite or glass supported silver exhibit superior antimicrobial effects.

## Summary

Disclosed is an antimicrobial polymer or coating, which polymer or coating comprises an effective antimicrobial amount of
elemental silver and
supported silver,
wherein the supported silver is supported on a zeolite or a glass.
Also disclosed is a method for providing a polymer or coating with antimicrobial activity, which method comprises incorporating therein an effective antimicrobial amount of
elemental silver and
supported silver,
wherein the supported silver is supported on a zeolite or a glass.

## Detailed Disclosure

The silver supported on a zeolite is for example taught in U.S. Pat. Nos. 4,775,585; 4,911,898; 4,911,899; 6,071,542 or 6,585,989, the relevant disclosures of which are hereby incorporated by reference.
A zeolite is generally aluminosilicate having a three dimensionally grown skeleton structure and is generally represented by $xM_{2/n}O{\cdot}Al_2O_3{\cdot}ySiO_2{\cdot}zH_2O$, written with $Al_2O_3$ as a basis, wherein M represents an ion-exchangeable metal ion, which is usually the ion of a monovalent or divalent metal; n corresponds to the valence of the metal; x is a coefficient of the metal oxide; y is a coefficient of silica; and z is the number of water of crystallization. The zeolites of the present invention have a specific surface area of at least $150m^2/g$. The present zeolites support antimicrobial silver, that is silver is retained at the ion-exchangeable sites of the zeolite.
The silver supported on a zeolite may be a surface-modified silver supported zeolite according to U.S. Patent No. 6,071,542.
The silver supported on glass may also include zinc, that is may be silver glass or silver zinc glass. Glass supported silver is taught for example in published U.S. application 2005/0233888, the disclosure of which is hereby incorporated by reference.
The silver supported on a zeolite or on glass typically contains about 0.1 to 10 %, especially 0.5 to 5 % silver, based on the total weight silver and support material. Particles of the supported silver are often in the micrometer scale, with average sizes e.g. from about 1 to 100, especially 1 to 20 micrometer.
The elemental silver may be micro scaled or may be nano scaled. Nano scaled antibacterial silver is disclosed for example in U.S. Pat. No. 6,822,034, the relevant disclosure of which is hereby incorporated by reference; typical size average of these nanoparticles ranges e.g. from about 1 to 50 nm, or from about 10 to 1000 nm, especially 10 to 100 nm. This reference also teaches liquid silicone rubber. Metallic antimicrobial silver in the form of micro-scaled porous particles is taught in U.S. Pat. No. 6,984,392, see especially column 2, lines 18-62, and column 3, lines 3 to 20, and US-A-2006-018943, the disclosure of which is also incorporated by reference; typical size average of these microparticles ranges from about 1 to 20 micrometer, preferably 10 to 20 micrometer.
The amount of elemental silver employed is for example from about 0.01 to about 5.0 weight percent, based

on the weight of the polymer or coating solids. For instance, the amount of elemental silver employed is from about 0.01 to about 2.0 weight percent or from about 0.01 to about 1.0 weight percent, based on the weight of the polymer or coating solids.

The amount of supported silver employed is for example from about 0.001 to about 0.2 weight percent, based on the weight of the polymer or coating solids. For instance, the amount of supported silver employed is from about 0.01 to about 0.2 weight percent or from about 0.05 to about 0.2 weight percent, based on the weight of the polymer or coating solids. These weight levels are based on the silver.

The elemental silver/supported silver weight/weight ratio (based on silver) is for example from about 10:1 to about 1000:1, especially from about 10:1 to about 100:1.

Further antimicrobials may also be present in the polymers or coatings, for instance 3,5-dimethyl-tetrahydro-1,3,5-2H-thiodiazin-2-thione, bis-tributyltinoxide, 4.5-dichlor-2-n-octyl-4-isothiazolin-3-one, N-butyl-benzisothiazoline, 10.10'-oxybisphenoxyarsine, zinc-2-pyridinthiol-1-oxide, 2-methylthio-4-cydopropylamino-6-(α,β-dimethylpropylamino)-s-triazine, 2-methylthio-4-cyclopropylamino-6-tert-butylamino-s-triazine, 2-methylthio-4-ethylamino-6-(α,β-dimethylpropylamino)-s-triazine, 2,4,4'-trichloro-2'-hydroxydiphenyl ether, IPBC, carbendazim or thiabendazole.

The polymers, polymer compositions or coatings of the invention additionally may containone or more conventional additives, such as components listed below:

1. <u>Antioxidants</u>

1.1. <u>Alkylated monophenols,</u> for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.

1.2. <u>Alkylthiomethylphenols</u>, for example 2,4-dioctylthiomethyl-6-tert-butylphenol, 2,4-dioctyl-thiomethyl-6-methylphenol, 2,4-dioctylthiomethyl-6-ethylphenol, 2,6-di-dodecylthiomethyl-4-nonylphenol.

1.3. <u>Hydroquinones and alkylated hydroquinones</u>, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.

1.4. <u>Tocopherols,</u> for example α-tocopherol, β-tocopherol, γ-tocopherol, δ-tocopherol and mixtures thereof (vitamin E).

1.5. <u>Hydroxylated thiodiphenyl ethers,</u> for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.

1.6. <u>Alkylidenebisphenols</u>, for example 2,2'-methylenebis(6-tert-butyl-4-methylphenol), 2,2'-methylenebis(6-tert-butyl-4-ethylphenol), 2,2'-methylenebis[4-methyl-6-(a-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methy-lenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl] terephthalate, 1,1-bis-(3,5-dimethyl-2-hydroxyphenyl)butane, 2,2-bis(3,5-di-tert-butyl-4-hydroxyphenyl)propane, 2,2-bis(5-tert-butyl-4-hydroxy2-methylphenyl)-4-n-dodecylmercaptobutane, 1,1,5,5-tetra-(5-tert-butyl-4-hydroxy-2-methylphenyl)pentane.

1.7. <u>O-, N- and S-benzyl compounds,</u> for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioteresph-

thalate, bis(3,5-di-tert-butyl-4-hydroxybenzyl)sulfide, isooctyl-3,5-di-tert-butyl-4-hydroxybenzylmercaptoacetate.

1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, didodecylmercaptoethyl-2,2-bis(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.

1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.

1.10. Triazine compounds, for example 2,4-bis(octylmercapto)-6-(3,5-di-tert-butyl-4-hydroxy-anilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.

1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.

1.12. Acylaminophenols, for example 4-hydroxylauranilide, 4-hydroxystearanilide, octyl N-(3,5-di-tert-butyl-4-hydroxyphenyl)carbamate.

1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.

1.15. Esters of B-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard®XL-1, supplied by Uniroyal).

1.18. Ascorbic acid (vitamin C)

1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenyl-amine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butyl-aminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylamino-methylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenyl-amino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenyl-amines, a mixture of mono- and dialkylated nonyldiphenylamines, a mixture of mono- and dialkylated dodecyldiphenylamines, a mixture of mono- and dialkylated isopropyl/isohexyl-diphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octyl-phenothiazines, N-allylphenothiazine, N,N,N',N'-tetraphenyl-1,4-diaminobut-2-ene.

2. UV absorbers and light stabilizers

2.1. 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl-2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl) benzotriazole, 2-(3',5'-bis-(α,α-dimethylbenzyl)-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyl-oxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonyl-ethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; $[R-CH_2CH_2-COO-CH_2CH_2]_2$, where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)-phenyl]-benzotriazole; 2-[2'-hydroxy-3'-(1,1,3,3-tetramethylbutyl)-5'-(α,α-dimethylbenzyl)-phenyl]benzotriazole.

2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

2.3. Esters of substituted and unsubstituted benzoic acids, for example 4-tert-butyl-phenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate, N-(β-carbomethoxy-β-cyanovinyl)-2-methylindoline, neopentyl tetra(α-cyano-β,β-diphenylacrylate.

2.5. Nickel compounds, for example nickel complexes of 2,2'-thio-bis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.

2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis (3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-$\alpha$-olefin copolymer with 2,2,6,6-tetramethyl-4-aminopiperidine or 1,2,2,6,6-pentamethyl-4-aminopiperidine, 2,4-bis[N-(1-cyclohexyloxy-2,2,6,6-tetramethylpiperidine-4-yl)-N-butylamino]-6-(2-hydroxyethyl)amino-1,3,5-triazine, 1-(2-hydroxy-2-methylpropoxy)-4-octadecanoyloxy-2,2,6,6-tetramethylpiperidine, 5-(2-ethylhexanoyl)-oxymethyl-3,3,5-trimethyl-2-morpholinone, Sanduvor (Clariant; CAS Reg. No. 106917-31-1], 5-(2-ethylhexanoyl)oxymethyl-3,3,5-trimethyl-2-morpholinone, the reaction product of 2,4-bis-[(1-cyclohexyloxy-2,2,6,6-piperidine-4-yl)butylamino]-6-chloro-s-triazine with N,N'-bis(3-aminopropyl)ethylenediamine), 1,3,5-tris(N-cyclohexyl-N-(2,2,6,6-tetramethylpiperazine-3-one-4-yl)amino)-s-triazine, 1,3,5-tris (N-cyclohexyl-N-(1,2,2,6,6-pentamethylpiperazine-3-one-4-yl)-amino)-s-triazine.

2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl) oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.

2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis (2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine, 2,4-bis(4-[2-ethylhexyloxy]-2-hydroxyphenyl)-6-(4-methoxyphenyl)-1,3,5-triazine.

3. Metal deactivators, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.

4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-dicumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris (3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.
The following phosphites are especially preferred:

Tris(2,4-di-tert-butylphenyl) phosphite (Irgafos®168, Ciba Specialty Chemicals Inc.), tris(nonylphenyl) phosphite,

(A)

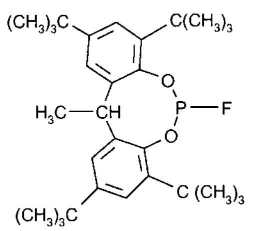

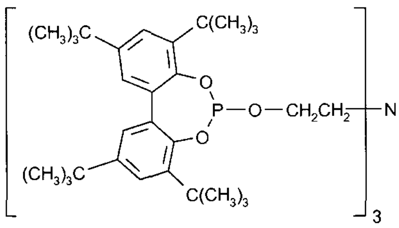

(B)

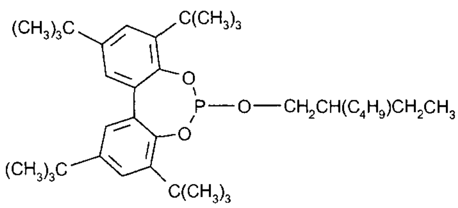

(C)

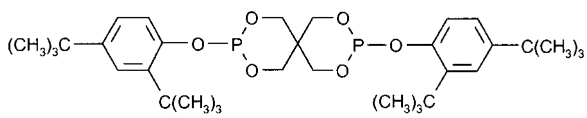

(D)

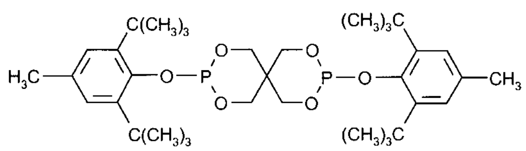

(E)

(F)

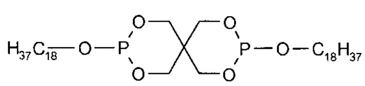

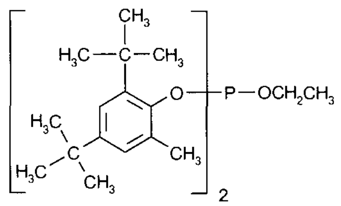

(G)

5. Hydroxylamines, for example N,N-dibenzylhydroxylamine, N,N-diethylhydroxylamine, N,N-dioctylhydroxylamine,

N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.

6. Nitrones, for example, N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecylnnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.

7. Thiosynergists, for example dilauryl thiodipropionate, dimistryl thiodipropionate, distearyl thiodipropionate or distearyl disulfide.

8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

9. Polyamide stabilizers, for example copper salts in combination with iodides and/or phosphorus compounds and salts of divalent manganese.

10. Basic co-stabilizers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.

11. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyldibenzylidene)sorbitol, and 1,3:2,4-di(benzylidene)sorbitol.

12. Fillers and reinforcing agents, for example calcium carbonate, silicates, glass fibres, glass beads, asbestos, talc, kaolin, mica, barium sulfate, metal oxides and hydroxides, carbon black, graphite, wood flour and flours or fibers of other natural products, synthetic fibers.

13. Other additives, for example plasticisers, lubricants, emulsifiers, pigments, rheology additives, catalysts, flow-control agents, optical brighteners, flameproofing agents, antistatic agents and blowing agents.

14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839, EP-A-0591102; EP-A-1291384 or 3-[4-(2-acetoxyethoxy)phenyl]-5,7-di-tert-butylbenzofuran-2-one, 5,7-di-tert-butyl-3-[4-(2-stearoyloxy-ethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one, 3-(2-acetyl-5-isooctylphenyl)-5-isooctyl-benzofuran-2-one.

Conventional additives and further antimicrobials, if present, are often contained in amounts ranging from 0.001 to 10, especially 0.01 to 5 % by weight, based on the polymer material.

A preferred antimicrobial polymer or coating according to the invention additionally contains, for example, one or more components selected from the group consisting of further antimicrobials, antioxidants, light stabilizers such as UV absorbers and/or sterically hindered amines, phosphites, phosphonites, nucleating agents, fillers, plasticisers, pigments, flameproofing agents, antistatic agents, examples for which are listed above.

The polymers, or plastics, may be in any form, for example fibers, films or molded parts. They may be for example woven or nonwoven polymer fabrics.

In general the plastics with antimicrobial activity according to the present invention may be selected from:

1. Polymers of monoolefins and diolefins, for example polypropylene, polyisobutylene, polybut-1-ene, poly-4-methylpent-1-ene, polyisoprene or polybutadiene, as well as polymers of cycloolefins, for instance of cyclopentene or norbornene, polyethylene (which optionally can be crosslinked), for example high density polyethylene (HDPE), low density polyethylene (LDPE), linear low density polyethylene (LLDPE), branched low density polyethylene (BLDPE) and medium density polyethylene (MDPE).
Polyolefins, i.e. the polymers of monoolefins exemplified in the preceding paragraph, preferably polyethylene and polypropylene, can be prepared by different, and especially by the following, methods:

a) radical polymerization (normally under high pressure and at elevated temperature).

b) catalytic polymerization using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either p- or s-coordinated. These metal complexes may be in the free form or fixed on substrates, typically on activated magnesium chloride, titanium(III) chloride, alumina or silicon oxide. These catalysts may be soluble or insoluble in the polymerization medium. The catalysts can be used by themselves in the polymerization or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).

2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).

3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylenelisobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.

4. Hydrocarbon resins (for example $C_5$-$C_9$) including hydrogenated modifications thereof (e.g. tackifiers) and mixtures of polyalkylenes and starch.

5. Polystyrene, poly(p-methylstyrene), poly($\alpha$-methylstyrene).

6. Copolymers of styrene or $\alpha$-methylstyrene with dienes or acrylic derivatives, for example styrene/butadiene, styrene/unsaturated ester, styrene/acrylonitrile, styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/ styrene.

7. Graft copolymers of styrene or $\alpha$-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, SAN, MBS, ASA or AES polymers.

8. Halogen-containing polymers such as polychloroprene, chlorinated rubbers, chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.

9. Polymers derived from $\alpha,\beta$-unsaturated acids and derivatives thereof such as polyacrylates and polymethacrylates; polymethyl methacrylates, polyacrylamides and polyacrylonitriles, impact-modified with butyl acrylate.

10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.

11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.

12. Homopolymers and copolymers of cyclic ethers such as polyalkylene glycols, polyethylene oxide, polypropylene oxide or copolymers thereof with bis-glycidyl ethers.

13. Polyacetals such as polyoxymethylene and those polyoxymethylenes which contain ethylene oxide as a comonomer; polyacetals modified with thermoplastic polyurethanes, acrylates or MBS.

14. Polyphenylene oxides and sulfides, and mixtures of polyphenylene oxides with styrene polymers or polyamides.

15. Polyurethanes derived from hydroxyl-terminated polyethers, polyesters or polybutadienes on the one hand and aliphatic or aromatic polyisocyanates on the other, as well as precursors thereof.

16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).

17. Polyureas, polyimides, polyamide-imides and polybenzimidazoles.

18. Polyesters derived from dicarboxylic acids and diols and/or from hydroxycarboxylic acids or the corresponding lactones, for example polyethylene terephthalate, polytrimethylene terephthalate, polybutylene terephthalate, poly-1,4-dimethylolcyclohexane terephthalate and polyhydroxybenzoates, as well as block copolyether esters derived from hydroxyl-terminated polyethers; and also polyesters modified with polycarbonates or MBS. Polyesters and polyester copolymers as defined in U.S. Patent No. 5,807,932 (column 2, line 53), incorporated herein by reference.

19. Polycarbonates and polyester carbonates.

20. Polysulfones, polyether sulfones and polyether ketones.

21. Crosslinked polymers derived from aldehydes on the one hand and phenols, ureas and melamines on the other hand, such as phenol/formaldehyde resins, urea/formaldehyde resins and melamine/formaldehyde resins.

22. Drying and non-drying alkyd resins.

23. Unsaturated polyester resins derived from copolyesters of saturated and unsaturated dicarboxylic acids with polyhydric alcohols and vinyl compounds as crosslinking agents, and also halogen-containing modifications thereof of low flammability.

24. Crosslinkable acrylic resins derived from substituted acrylates, for example epoxy acrylates, urethane acrylates or polyester acrylates.

25. Alkyd resins, polyester resins and acrylate resins crosslinked with melamine resins, urea resins, polyisocyanates or epoxy resins.

26. Crosslinked epoxy resins derived from polyepoxides, for example from bis glycidyl ethers or from cycloaliphatic diepoxides.

27. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.

28. Blends of the aforementioned polymers (polyblends), for example PP/EPDM, Polyamide/- EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO.

29. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.

30. Aqueous emulsions of natural or synthetic rubber, e.g. natural latex or latices of carboxylated styrene/butadiene copolymers.

31. Polysiloxanes such as the soft, hydrophilic polysiloxanes described, for example, in U.S. Patent No. 4,259,467; and the hard polyorganosiloxanes described, for example, in U.S. Patent No. 4,355,147.

32. Silicone elastomers, for example liquid silicone rubbers (LSR). Liquid Silicone Rubbers are available from Dow Chemical and are described for example in U.S. Pat. Nos. 6,569,536; 6,420,038; 6,297,291; 6,218,466; 6,130,272; 5,994,461; 5,989,719; 5,973,030; 5,908,888; 5,880,199; 5,877,256; 5,859,094; 5,789,084 and 5,661,210. The disclosures of these U.S. patents are incorporated by reference.

33. Polyketimines in combination with unsaturated acrylic polyacetoacetate resins or with unsaturated acrylic resins. The unsaturated acrylic resins include the urethane acrylates, polyether acrylates, vinyl or acryl copolymers with pendant unsaturated groups and the acrylated melamines. The polyketimines are prepared from polyamines and ketones in the presence of an acid catalyst.

34. Radiation curable compositions containing ethylenically unsaturated monomers or oligomers and a polyunsaturated aliphatic oligomer.

35. Epoxymelamine resins such as light-stable epoxy resins crosslinked by an epoxy functional coetherified high solids melamine resin such as LSE-4103 (Monsanto).

Included also are thermoplastic olefin (TPO), thermoplastic elastomers, polyetherimide, polymethylpentene, polyphenylene ether, polyphenylene sulfide, polysulfone or polytetrafluoroethylene (PTFE). Some polymers of specific technical interest include:

- Polysulfone (PSF)
- Polyethersulfone (PES)
- Polyphenylsulfone (PPS)
- Polyvinylidene Fluoride (PVDF)
- Polypropylene (PP)
- Polyethylene (PE)
- Cellulose, Cellulose acetates (CA), Cellulose nitrate
- Polyamide (PA)

- Polyacrylonitrite (PAN)
- Polytetrafluoroethylene (PTFE)
- Polycarbonate (PC)
- Polymethylmethacrylate (PMMA).

In particular, the present polymers are those that are typically employed in medical applications, for example polyurethanes, polycarbonate, liquid silicone rubbers, polyethylene, polypropylene, polyethylene/polypropylene copolymers or polymer composites.

Polymer composites are for instance natural products composites, for example a natural product mixed with a thermoplastic polymer such as a polyolefin. Such composites are disclosed in published U.S. app. No. 20040235983, the disclosure of which is hereby incorporated by reference. Natural products are for instance wood flour, flax, hemp, jute, kenaf or rice husk. The thermoplastic polymer is for instance polyethylene or polypropylene.

The antimicrobial silver additives of the invention may be added to the polymer substrate individually or mixed with one another. If desired, the individual components can be mixed with one another before incorporation into the polymer for example by dry blending.

The incorporation of the silver additives of the invention is carried out by known methods such as dry blending in the form of a powder, or wet mixing in the form of solutions, dispersions or suspensions for example in an inert solvent, water or oil. The additives of the invention may be incorporated, for example, before or after molding or also by applying the dissolved or dispersed additive or additive mixture to the polymer material, with or without subsequent evaporation of the solvent or the suspension/dispersion agent. They may be added directly into the processing apparatus (e.g. extruders, internal mixers, etc), e.g. as a dry mixture or powder or as solution or dispersion or suspension.

The incorporation can be carried out in any heatable container equipped with a stirrer, e.g. in a closed apparatus such as a kneader, mixer or stirred vessel. The incorporation is preferably carried out in an extruder or in a kneader. The processing may take place in an inert atmosphere or in the presence of oxygen.

The addition of the silver additives to the polymer substrate can be carried out in all customary mixing machines in which the polymer is melted and mixed with the additives. Suitable machines are known to those skilled in the art. They are predominantly mixers, kneaders and extruders.

Processing includes extrusion, co-kneading, pultrusion, compression molding, sheet extrusion, thermoforming, injection molding or rotational molding. The process is preferably carried out in an extruder by introducing the additives during processing.

Particularly preferred processing machines are single-screw extruders, contrarotating and corotating twin-screw extruders, rotomolding devices, planetary-gear extruders, ring extruders or cokneaders. It is also possible to use processing machines provided with at least one gas removal compartment to which a vacuum can be applied.

Suitable extruders and kneaders are described, for example, in Handbuch der Kunststoffextrusion, Vol. 1 Grundlagen, Editors F. Hensen, W. Knappe, H. Potente, 1989, pp. 3-7, ISBN:3-446-14339-4 *(Vo/.* 2 Extrusionsanlagen 1986, ISBN 3-446-14329-7).

For example, the screw length is 1-60 screw diameters, preferably 35-48 screw diameters. The rotational speed of the screw is preferably 10-600 rotations per minute (rpm), very particularly preferably 25-300 rpm.

The maximum throughput is dependent on the screw diameter, the rotational speed and the driving force. The process of the present invention can also be carried out at a level lower than maximum throughput by varying the parameters mentioned or employing weighing machines delivering dosage amounts.

The silver additives can be premixed or added individually.

The silver additives of the invention can also be added to the polymer in the form of a masterbatch ("concentrate") which contains the components in a concentration of, for example, about 1% to about 40% and preferably about 2% to about 20% by weight incorporated in a polymer. The polymer must not necessarily be identical to the polymer where the additives are added finally. In such operations, the polymer can be used in the form of powder, granules, solutions, suspensions or in the form of latices.

Incorporation can take place prior to or during the shaping operation, or by applying the dispersed compound to the polymer, with or without subsequent evaporation of the solvent. A further possibility for incorporating the additives of the invention into polymer substrates is to add them before, during or directly after the polymerization of the corresponding monomers or prior to crosslinking. In this context the additives of the invention can be added as it is or else in encapsulated form (for example in waxes, oils or polymers).

The polymers containing the additives of the invention described herein can be used for the production of moldings, rotomolded articles, injection molded articles, blow molded articles, profiles, films, woven and nonwoven fabrics, and the like.

When the plastic article is for the medical sector, it is for example a catheter, hose, tube, valve, articles for urology, bone cement, fabric, toothbrushes, silicone plastics, films, textiles, diapers and the like.

The coatings according to this invention contain a film forming binder.

The binder can in principle be any binder which is customary in industry, for example those described in Ullmann's Encyclopedia of Industrial Chemistry, 5th Edition, Vol. A18, pp. 368-426, VCH, Weinheim 1991. In general, it is a film forming binder based on a thermoplastic or thermosetting resin, predominantly on a thermosetting resin. Examples thereof are alkyd, acrylic, acrylic alkyd, polyester, phenolic, melamine, epoxy and polyurethane resins and mixtures thereof.

The binder can be a cold-curable or hot-curable binder; the addition of a curing catalyst may be advantageous. Suitable catalysts which accelerate curing of the binder are described, for example, in Ullmann's Encyclopedia of Industrial Chemistry, Vol. A18, p.469, VCH Verlagsgesellschaft, Weinheim 1991.

The present coatings are for example employed as a top coat for plastics or metal or as a wood coating.

Examples of coatings compositions containing specific binders are:

1. paints based on cold- or hot-crosslinkable alkyd, acrylate, polyester, epoxy or melamine resins or mixtures of such resins, if desired with addition of a curing catalyst;
2. two-component polyurethane paints based on hydroxyl-containing acrylate, polyester or polyether resins and aliphatic or aromatic isocyanates, isocyanurates or polyisocyanates;
3. one-component polyurethane paints based on blocked isocyanates, isocyanurates or polyisocyanates which are deblocked during baking, if desired with addition of a melamine resin;
4. one-component polyurethane paints based on a trisalkoxycarbonyltriazine crosslinker and a hydroxyl group containing resin such as acrylate, polyester or polyether resins;
5. one-component polyurethane paints based on aliphatic or aromatic urethaneacrylates or polyurethaneacrylates having free amino groups within the urethane structure and melamine resins or polyether resins, if necessary with curing catalyst;
6. two-component paints based on (poly)ketimines and aliphatic or aromatic isocyanates, isocyanurates or polyisocyanates;
7. two-component paints based on (poly)ketimines and an unsaturated acrylate resin or a polyacetoacetate resin or a methacrylamidoglycolate methyl ester;
8. two-component paints based on carboxyl- or amino-containing polyacrylates and polyepoxides;
9. two-component paints based on acrylate resins containing anhydride groups and on a polyhydroxy or polyamino component;
10. two-component paints based on acrylate-containing anhydrides and polyepoxides;
11. two-component paints based on (poly)oxazolines and acrylate resins containing anhydride groups, or unsaturated acrylate resins, or aliphatic or aromatic isocyanates, isocyanurates or polyisocyanates;
12. two-component paints based on unsaturated polyacrylates and polymalonates;
13. thermoplastic polyacrylate paints based on thermoplastic acrylate resins or externally crosslinking acrylate resins in combination with etherified melamine resins;
14. paint systems based on siloxane-modified or fluorine-modified acrylate resins.

The coatings compositions may also comprise further components, examples being solvents, pigments, dyes, plasticizers, stabilizers, thixotropic agents, drying catalysts and/or levelling agents. Examples of possible components are those described in Ullmann's Encyclopedia of Industrial Chemistry, 5th Edition, Vol. A18, pp. 429-471, VCH, Weinheim 1991.

Possible drying catalysts or curing catalysts are, for example, organometallic compounds, amines, amino-containing resins and/or phosphines. Examples of organometallic compounds are metal carboxylates, especially those of the metals Pb, Mn, Co, Zn, Zr or Cu, or metal chelates, especially those of the metals Al, Ti or Zr, or organometallic compounds such as organotin compounds, for example.

Examples of metal carboxylates are the stearates of Pb, Mn or Zn, the octoates of Co, Zn or Cu, the naphthenates of Mn and Co or the corresponding linoleates, resinates or tallates.

Examples of metal chelates are the aluminium, titanium or zirconium chelates of acetylacetone, ethyl acetylacetate, salicylaldehyde, salicylaldoxime, o-hydroxyacetophenone or ethyl trifluoroacetylacetate, and the alkoxides of these metals.

Examples of organotin compounds are dibutyltin oxide, dibutyltin dilaurate or dibutyltin dioctoate.

Examples of amines are, in particular, tertiary amines, for example tributylamine, triethanolamine, N-methyldiethanolamine, N-dimethylethanolamine, N-ethylmorpholine, N-methylmorpholine or diazabicyclooctane (triethylenediamine) and salts thereof. Further examples are quaternary ammonium salts, for example trimethylbenzylammonium chloride.

Amino-containing resins are simultaneously binder and curing catalyst. Examples thereof are amino-containing acrylate copolymers.

The curing catalyst used can also be a phosphine, for example triphenylphosphine.

The coatings compositions can also be radiation-curable coating compositions. In this case, the binder essentially comprises monomeric or oligomeric compounds containing ethylenically unsaturated bonds, which after application are cured by actinic radiation, i.e. converted into a crosslinked, high molecular weight form. Where the system is UV-curing, it generally contains a photoinitiator as well. Corresponding systems are described in the abovementioned publication Ullmann's Encyclopedia of Industrial Chemistry, 5th Edition, Vol. A18, pages 451-453.

The coatings compositions according to the invention can be applied to any desired substrates, for example to metal, wood, plastic, ceramic materials or plastic wood composites.

Also disclosed is the use of present coatings compositions for protecting a wood surface, e.g. by incorporation of the present silver additives into a varnish, paint, stain or impregnation on wood. The present invention therefore also pertains to a method for providing antimicrobial activity to a wood surface, which method comprises applying a present coatings composition, especially a varnish, paint, stain or impregnation on wood. The silver components may be applied as part of a stain or impregnation or as part of a top coat.

In case that the wood coating is a stain or impregnation, preferably a solvent is used selected e.g. from the group consisting of aliphatic hydrocarbons, cycloaliphatic hydrocarbons, aromatic hydrocarbons, alcohols, ethers, esters, ketones, glycols, glycol ethers, glycol esters, polyglycols or mixtures thereof. Preferably in this case the binder is selected from the group consisting of alkyd resins, modified alkyd resins, autocrosslinking or non-autocrosslinking acrylic resins, polyester resins, drying oils, phenolic resins, nitrocellulose or mixtures thereof.

Other additives like fungicides or insecticides are possible. Exemplary of useful fungicides are tributyltin oxide, phenylmercury salts, copper naphthenate, 1-chloronaphthalene or pentachlorophenol. Exemplary of useful insecticides are DDT, dieldrin, lindane, azaconazol, cypermethin, benzalkoniumhydrochloride, propiconazol or parathion.

Any coating composition suitable for coating wood may be used as a top coat. It will normally contain a binder, dissolved or dispersed in an organic solvent or in water or a mixture of water and solvent. The binder may typically be a surface coating resin which dries in the air or hardens at room temperature. Exemplary of such binders are nitrocellulose, polyvinyl acetate, polyvinyl chloride, unsaturated polyester resins, polyacrylates, polyurethanes, epoxy resins, phenolic resins, and especially alkyd resins. The binder may also be a mixture of different surface coating resins. Provided the binders are curable binders, they are normally used together with a hardener and/or accelerator.

The top coat may also be a radiation-curable, solvent-free formulation of photopolymerizable compounds. Illustrative examples are mixtures of acrylates or methacrylates, unsaturated polyester/styrene mixtures or mixtures of other ethylenically unsaturated monomers or oligomers.

The top coat may contain a soluble dye and/or a pigment and/or a filler. The pigment may be an organic, inorganic or metallic pigment. The pigments may be opaque or transparent such as for example transparent iron oxides. The filler may be typically kaolin, calcium carbonate or aluminium silicate. Preferably the top coat is a clear varnish, i.e. it contains no undissolved components.

The present invention is particularly useful for the following applications:

in home applications, such as furniture, wood floors, chipboards or timber work;
outdoor applications such as fences, construction parts, wooden fronts, window frames and the like.

The present coatings compositions may be applied to the substrates by the customary methods, for example by brushing, spraying, pouring, dipping or electrophoresis; see also Ullmann's Encyclopedia of Industrial Chemistry, 5th Edition, Vol. A18, pp. 491-500.

Depending on the binder system, the coatings may be cured at room temperature or by heating. The coatings may for example be cured at 50 - 150°C, and in the case of powder coatings or coil coatings even at higher temperatures.

The coatings compositions can comprise an organic solvent or solvent mixture in which the binder is soluble. The coatings compositions can otherwise be an aqueous solution or dispersion. The vehicle can also be a mixture of organic solvent and water. The coating composition may be a high-solids paint or can be solvent-free (e.g. a powder coating material). Powder coatings are, for example, those described in Ullmann's Encyclopedia of Industrial Chemistry, 5th Ed., A18, pages 438-444. The powder coating material may also have the form of a powder-slurry (dispersion of the powder preferably in water).

The pigments can be inorganic, organic or metallic pigments. The present coatings compositions may contain no pigments and may be used as a clearcoat.

The silver additives are simply added to the coating composition, either together or separately, at any point prior to curing of the coating.

## Examples

The following Examples further illustrate the invention. Unless otherwise reported, amounts are in weight percent. Regarding the supported silver, the weight percent reported is based on the silver. Room temperature generally

denotes a temperature from the range 20-25°C.

**Example 1**

Polypropylene is tumble mixed to contain 0.01 or 0.1 % by weight of elemental silver, and 0.001 or 0.01% by weight of silver supported on a zeolite or a glass, based on the weight of polymer.

These mixes are individually compounded using a Leistritz 27 mm twin screw extruder. The melt is cooled in water a trough and the strand is converted into pellets via a Conair - Jetro Model 304 pelletizer.

The mixes at 45Kg each are converted into melt blown nonwoven textiles using a 500mm Reifenhäuser Melt Blowing Pilot Line.

The nonwoven textiles exhibit outstanding antimicrobial activity.

**Example 2**

Elemental silver, 1%, and silver supported on zeolite or on a glass, 0.1%, by weight silver based on the weight of the resin solids, are incorporated into a two-component polyester urethane coating based on a commercially available polyester polyol and commercially available isocyanurate. The coating system is catalyzed with 0.015% dibutyl tin dilaurate based on total resin solids.

The coating formulation is applied by drawdown onto transparent glass slides approximately 4" x 6" to a film thickness of about 2 mils (0.002").

These films are cured in an oven at 120°F (49°C) oven.

The polyester urethane films exhibit outstanding antimicrobial activity.

**Example 3**

Film grade polyethylene is dry blended with an appropriate amount of the silver additives, and then melt compounded at 200°C into "Masterbatch" pellets. The fully formulated "Masterbatch" pellets are dry blended with polyethylene resin to get the desired final stabilizer concentrations. Typical formulations contain elemental silver at about 2% and supported silver at about 0.02%, a metal stearate such as calcium stearate at 0.05% to 0.5%, a phosphite at 0% to 0.1%, a phenolic antioxidant at 0% to 1.25%, an N,N-dialkylhydroxylamine at 0% to 0.1% and optionally a hindered amine at 0% to 2.0%. This stabilized fully formulated resin is then blown at 200°C into a 150 micron thick film on a DOLCI film line.

The PE film exhibits outstanding antimicrobial activity.

**Example 4**

Polyurethane pellets are admixed with 1 weight percent of elemental silver and 0.04 weight percent silver supported on a zeolite or on a glass. The pellets are extruded and compression molded into 125 mil plaques.

The polyurethane plaques exhibit outstanding antimicrobial activity.

Example 5

Liquid silicone rubber sheets are prepared as described in U.S. Pat. No. 5,973,030. Further included in the formulations are 0.01 to 1 weight percent elemental silver and 0.001 to 0.01 weight percent silver supported on a zeolite or on a glass. For instance, 1.2 weight percent elemental silver is employed and 0.05 weight percent silver supported on a zeolite or on a glass is employed.

The sheets exhibit outstanding antimicrobial activity.

Example 6

Water based clear acrylic industrial coating formulation containing 1 weight percent elemental silver and 0.06 weight percent silver supported on a zeolite or on a glass is coated onto glass slides at 2 mil thickness.

The coated slides exhibit excellent antimicrobial activity.

**Example 7**

A solvent based polyurethane coating is prepared containing 1 weight percent elemental silver and 0.04 weight percent silver supported on a zeolite or on a glass. The coating is applied to glass slides at 2 mil thickness.

The coated slides exhibit outstanding antimicrobial activity.

**Example 8**

A clear UV curable water-borne industrial coating is formulated by mixing with high speed stirrer the ingredients (see table below).

| | Weight-% |
|---|---|
| Alberdingk Lux 399 (acrylate polyurethane copolymer dispersion), Alberdingk Boley | 98.3 |
| Borchigel L 75 N (thickener), Borchers | 0.3 |
| Byk 347 (wetting agent), Byk Chemie | 0.4 |
| IRGACURE 500 (photoinitiator), Ciba | 1.0 |

To the prepared formulation, the elemental silver (0.5 wt.-% silver on total formulation) and the silver supported on a zeolite or on a glass (0.005 wt.-% silver on total formulation) is added, and stirred at high shear rate (2000 rpm) for 30 minutes at room temperature. For the purpose of comparison, control formulations containing the elemental silver alone, supported silver alone, or no silver at all, are prepared in the same manner.

The coating is applied with a 50 μm slit coater to white coated aluminium panels, dried 10 minutes at 60°C and cured with two medium pressure mercury vapor lamps (2 x 80W/cm) at 5m/min for microbiological tests.

**Example 9**

2 Pack solvent-borne polyurethane coatings are prepared according the following procedure:

The elemental silver (5 wt.-% on mill-base formulation) and the silver supported on a zeolite or on a glass (5 wt.-% on mill-base formulation) is added to the binder and solvent as mill-base formulation and stirred at high shear rate for 10 minutes until a particle size below 5μm is achieved.

Mill-base formulation:

| | Weight-% |
|---|---|
| Macrynal SM 510n (60% acrylic copolymer in 10% aromatic hydrcarbons, 20% xylene, 10% n-butylacetate) | 79.0 |
| Butylglykolacetate (solvent) | 11.0 |
| Zeolite or glass containg silver (1.1%) | 5.0 |
| Elemental silver | 5.0 |
| Sum | 100.0 |

The coating formulation was prepared by mixing the ingredients of component A and adding component B at the end before application (see table below). The content of elemental silver in total formulation is 1 wt.-% silver and the content of silver supported on a zeolite or on a glass in total formulation is 0.011 wt.-% silver.

Coating formulation:

| **Component A:** | Weight-% |
|---|---|
| Mill-base | 28.0 |

(continued)

| Component A: | Weight-% |
|---|---|
| Macrynal SM 510n (60% acrylic copolymer in 10% aromatic hydrcarbons, 20% xylene, 10% n-butylacetate) | 52.3 |
| Butylglykolacetate (solvent) | 9.7 |
| Solvesso 100 (mixture of aromatic hydrocarbons) | 6.2 |
| Methylisobutylketone (solvent) | 3.6 |
| Byk 300 (52% solution of a polyether modified dimethylpolysiloxane-copolymer in xylene / isobutanol (4/1)) | 0.2 |
| **Component B:** | |
| Desmodur N 75 (75% aliphatic isocyanate in methoxypropylacetate / xylene (1/)) | 40.0 |
| Sum | 140.0 |

Each coating formulation is sprayed on white coated aluminium panels (dry film thickness: 40μm) and dried 30 minutes at 80°C for microbiological tests.

**Example 10: Modified AATCC-100**

This test method is a modification of the AATCC standard 100-1998 for the assessment of antibacterial finishes on textile materials. The method allows testing of textile materials as well as of hard surfaces for antimicrobial activity.

Hard surfaces equipped with an antimicrobial coating are inoculated with a defined cell count of a specific test organism. After appropriate incubation times, the cell count on the antimicrobially finished materials is determined and compared to a control which does not contain any antimicrobial.

Depending on the application, the test piece can be preincubated in an appropriate solution like water, deion. water or 7mM $NaNO_3$.

Two samples per antimicrobial coating are inoculated. Each sample is placed into a sterile petri dish (55 mm) and inoculated with an appropriate amount of bacterial suspension (100μl - 200μl) resulting in a final concentration of bacteria on the sample of ~$10^5$ cfu (colony forming units). The inoculated samples are incubated in a humid chamber at 37°C for 24 hours. After incubation, 10 ml inactivation buffer is added to the petri dishes of each sample. After shaking the dishes for 1 min. in order to collect the surviving organisms, a dilution series in water is made. 100 μl of the undiluted suspensions and of the 1:10 and 1:1000 dilutions are plated out by means of a spiral plater onto Tryptic Soy Agar with inactivating agents.

These plates are then incubated for 24 - 48 hours (incubation time depends on the used bacteria) at 37°C.

After incubation, the visible colonies are counted and the results are given as colony forming units per sample [cfu/sample] according to the following formula:

**cfu/plate x dilution factor x 10 x10**

The detection limit of this method is <100 cells/sample if no bacteria colony appears on the plate of the undiluted suspension.

Generally the number of organisms [cfu/sample] on the samples equipped with antimicrobial properties is compared to the cell counts eluted from untreated control samples after incubation for an appropriate time. The difference between these two values provides information about the efficacy of the tested antimicrobial finish or coating of the material.

Solid media

Casein-soy meal peptone-agar:

Tryptic Soy Agar from Merck #18360: 2% peptone (from casein and soymeal), 0,5% NaCl, 1,5% Agar-agar containing 3% Tween® 80, 0,3% Lecithin and 0,1% L-histidine (petri dishes with 18 ml agar).

Liquid media

Culture medium:

Casein-soy meal peptone broth

Inactivation medium:

Phosphate buffer 0,07 M, pH 7,4 containing 1% Tween 80 and 0,3% lecithin.

Test organisms

Escherichia coli ATCC 10536

Results with UV clear coating of example 8:

[cfu/sample]

| Samples | Before preincubation | After preincubation in water | After preincubation in deion.water | After preincubation in 7mM NaNO3 |
|---|---|---|---|---|
| no silver (control) | $3.0*10^6$ | $1.0*10^5$ | $1.8*10^7$ | $4.7*10^5$ |
| | $2.8*10^6$ | $4.5*10^5$ | $1.5*10^7$ | $5.6*10^5$ |
| 0.5 % silver on support* (comparison) | <100 | $8.5*10^5$ | $1.5*10^7$ | $9.5*10^5$ |
| | <100 | $1.7*10^6$ | $9.2*10^6$ | $9.4*10^5$ |
| 0.5% silver on support*/ elemental** (invention) | <100 | <100 | <100 | <100 |
| | <100 | <100 | $2.3*10^3$ | $1.0*10^3$ |
| O/n culture *Escherichia coli* ATCC 10536: $2.2x10^9$ cfu/ml | | | | |

* Silver on glass/zeolithe IRGAGUARD® B6000, available from Ciba.
** Elemental silver used is microsilver of US-6984392.

**Example 11:** Antimicrobial Liquid Silicone Rubber (LSR)

The polymer with additive of the invention is compression molded at 350°F (ca. 177°C) during 10 minutes, yielding molded plates (3X3 inchesX125mils; 23 grams each).

For the purpose of comparison, control formulations containing the elemental silver alone, supported silver alone, or no silver at all, are prepared in the same manner. Evaluation of antimicrobial activity is done according to Bechert et al., nature medicine 6, 1053 (2000); the antimicrobial threshold for "Onset OD [h] - net" is 6 hours. The samples are either tested without pre-incubation (representing immediate efficacy) or after 72h pre-incubation (7 mM aq. $NaNO_3$; simulating extended exposure to water).

Results are compiled in the following table; assessment:

+ antimicrobial action,
- no antimicrobial action.

| | | Onset OD [h] - net | | | |
|---|---|---|---|---|---|
| Formulation | Antimicrobials | 72h pre-incubation | 72h pre-incubation | w/o pre-incubation | w/o pre-incubation |
| | | S. Epi | E. Coli | S. Epi | E. Coli |
| control | none | - | - | - | - |
| comparison | 1% elemental silver** | + | + | - | + |
| comparison | 0.5% silver on support* | - | - | - | - |
| comparison | 2% silver on support* | - | + | - | + |
| invention | 1% elemental silver** + 0.5% silver on support* | + | + | + | + |
| invention | 1% elemental silver** + 2% silver on support* | + | + | + | + |
| * Containing silver zeolithe; IRGAGUARD® B5000 available from Ciba.<br>** Elemental silver used is microsilver of US-6984392. | | | | | |

## Claims

1. An antimicrobial polymer or coating, which polymer or coating comprises an effective antimicrobial amount of elemental silver and
supported silver,
wherein the supported silver is supported on a zeolite or a glass.

2. An antimicrobial polymer or coating according to claim 1, wherein the supported silver is supported on a zeolite.

3. An antimicrobial polymer or coating according to claim 1, wherein the supported silver is supported on glass.

4. An antimicrobial polymer or coating according to claim 1, wherein the elemental silver/supported silver weight/weight ratio, based on silver, is from 10:1 to 1000:1.

5. An antimicrobial polymer or coating according to claim 1, wherein the elemental silver is present from 0.01 to 5.0 weight percent, and wherein the supported silver is present from 0.001 to 0.2 weight percent, based on the weight of the polymer or the coating solids.

6. An antimicrobial polymer or coating according to claim 1, wherein the elemental silver is present from about 0.01 to 2.0 weight percent, especially 0.01 to 1.0 weight percent, and wherein the supported silver is present from about 0.01 to 0.2 weight percent, especially 0.05 to 0.2 weight percent, based on the weight of the polymer or coating solids.

7. An antimicrobial polymer or coating according to claim 1, wherein the elemental silver is present as metallic microparticles or nanoparticles.

8. An antimicrobial polymer according to claim 1 which is a fiber, film, molded part or a woven or nonwoven fabric.

9. An antimicrobial polymer according to claim 1 which is polyurethane, polycarbonate, liquid silicone rubber, polyethylene, polypropylene, polyethylene/polypropylene copolymer or is a polymer composite.

10. An antimicrobial coating according to claim 1.

11. An antimicrobial coating according to claim 1 which is a coating over plastic, wood, metal, ceramic or a plastic wood composite.

12. An antimicrobial polymer or coating according to claim 1, which additionally contains one or more components selected from the group consisting of further antimicrobials, antioxidants, light stabilizers such as UV absorbers and/or sterically hindered amines, phosphites, phosphonites, nucleating agents, fillers, plasticisers, pigments, flameproofing agents, antistatic agents.

13. A method for providing a polymer or coating with antimicrobial activity, which method comprises incorporating therein an effective antimicrobial amount of elemental silver and supported silver, wherein the supported silver is supported on a zeolite or a glass.

14. Use of a combination of elemental silver and supported silver, wherein the supported silver is supported on a zeolite or a glass, for providing a polymer or coating with antimicrobial activity.

**Patentansprüche**

1. Antimikrobielles Polymer oder antimikrobielle Beschichtung, umfassend eine antimikrobiell wirksame Menge von elementarem Silber und
geträgertem Silber,
wobei das geträgerte Silber auf einem Zeolithen oder einem Glas geträgert ist.

2. Antimikrobielles Polymer oder antimikrobielle Beschichtung nach Anspruch 1, wobei das geträgerte Silber auf einem Zeolithen geträgert ist.

3. Antimikrobielles Polymer oder antimikrobielle Beschichtung nach Anspruch 1, wobei das geträgerte Silber auf Glas geträgert ist.

4. Antimikrobielles Polymer oder antimikrobielle Beschichtung nach Anspruch 1, wobei das Gewicht/Gewicht-Verhältnis von elementarem Silber zu geträgertem Silber, bezogen auf Silber, 10:1 bis 1000:1 beträgt.

5. Antimikrobielles Polymer ober antimikrobielle Beschichtung nach Aspruch 1, wobei das elementare Silber in einer Menge von 0,01 bis 5,0 Gewichtsprozent vorliegt und das geträgerte Silber in einer Menge von 0,001 bis 0,2 Gewichtprozent vorliegt, bezogen auf das Gewicht des Polymers bzw. der Beschichtungsfeststoffe.

6. Antimikrobielles Polymer oder antimikrobielle Beschichtung nach Anspruch 1, wobei das elementare Silber in einer Menge von etwa 0,01 bis 2,0 Gewichtsprozent, insbesonders 0,01 bis 1,0 Gewichtsprozent, vorliegt und das geträgerte Silber in einer Menge von etwa 0,01 bis 0,2 Gewichtsprozent, speziell 0,05 bis 0,2 Gewichtsprozent, vorliegt, bezogen auf das Gewicht des Polymers bzw. der Beschichtungsfeststoffe.

7. Antimikrobielles Polymer ober antimikrobielle Beschichtung nach Anspruch 1, wobei das elementare Silber in Form von metallischen Mikroteilchen oder Nanoteilchen vorliegt.

8. Antimikrobielles Polymer nach Anspruch 1, bei dem es sich um eine Faser, eine Folie, ein Formteil ober einem Web- oder vliesstoff handelt.

9. Antimikrobielles Polymer nach Anspruch 1, bei dem es sich um Polyurethan, Polykarbonat, flüssigen Silikonkautschuk, Polyethylen, Polypropylene, Polyethylen/Polypropylen-Copolymer oder einen Polymerverbundwerkstoff handelt.

10. Antimikrobielle Beschichtung nach Anspruch 1.

11. Antimikrobielle Beschichtung nach Anspruch 1, bei der es sich um eine Beschichtung auf Kunststoff, Holz, Metall, Keramik oder einem Kunststoff-Holz-Verbundwerkstoff handelt.

**12.** Antimikrobielles Polymer oder antimikrobielle Beschichtung nach Anspruch 1, das bzw. die zusätzlich eine oder mehrere Komponenten aus der Gruppe bestehend aus weiteren antimikrobiellen Mitteln, Antioxidantien, Lichtschutzmitteln wie UV-Absorbern und/oder sterisch gehinderten Aminen, Phosphiten, Phosphoniten, Nukleierungsmitteln, Füllstoffen, Weichmachern, Pigmenten, Flammschutzmitteln und Antistatika enthält.

**13.** Verfahren zur Bereitstellung eines Polymers oder einer Beschichtung mit antimikrobieller Wirkung, bei dem man darin eine antimikrobiell wirksame Menge von elementaren Silber und geträgertem silber einarbeiten, wobei das geträgerte Silber auf einem Zeolithen ober einem Glas geträgert ist.

**14.** Verwendung einer Kombinatin von elementarem Silber und geträgertem Silber, wobei das geträgerte Silber auf einen Zeolithen oder einem Glas geträgert ist, zur Bereitstellung eines Polymers ober einer Beschichtung mit antimikrobieller Wirkung.

**Revendications**

**1.** Polymère ou revêtement antimicrobien, lequel polymère ou revêtement comprend une quantité antimicrobienne efficace
d'argent élémentaire et
d'argent supporté,
dans lequel l'argent supporté est supporté sur une zéolithe ou un verre.

**2.** Polymère ou revêtement antimicrobien selon la revendication 1, dans lequel l'argent supporte est supporté sur une zéolithe.

**3.** Polymère ou revêtement antimicrobien selon la revendication 1, dans lequel l'argent supporté est supporté sur du verre.

**4.** Polymère ou revêtement antimicrobien selon la revendication 1, dans lequel le rapport pondéral argent élémentaire/argent support, rapporté à l'argent, est de 10:1 à 1000:1.

**5.** Polymère ou revêtement antimicrobien selon la revendication 1, dams lequel l'argent élémentaire est présent à raison, de 0,01 à 5,0 pour cent en poids, et dans lequel l'argent supporté est présent à raison de 0,001 à 0,2 pour cent en poids, par rapport au poids de l'extrait du polymère ou du revêtement.

**6.** Polymère ou revêtement antimicrobien selon la revendication 1, dans lequel l'argent élémentaire est présent à raison d'environ 0,01 à 2,0 pour cent en poids, tout spécialement de 0,01 à 1,0 pour cent en poids, et dans lequel l'argent supporté est présent à raison d'environ 0,01 à 0,2 pour cent en poids, tout spécialement de 0,05 à 0,2 pour cent en poids, par rapport au poids de l'extrait sec du polymère ou du revêtement.

**7.** Polymére ou revêtement antimicrobien selon la revendication 1, dans lequel l'argent élémentaire est présent sous forme de microparticles ou de nanoparticules métalliques.

**8.** Polymère antimicrobien selon la revendication 1 qui est une fibre, un film, une pièce moulée ou un tissu tissé ou non tissé.

**9.** Polymère antimicrobien selon la revendication 1 qui est du polyuréthane, du polycarbonate, du caoutchouc silicone liquide, du polyéthylène, du polypropylène, un copolymère polyéthylène/polypropylène ou qui est un composite de polymère.

**10.** Revêtement antimicrobien selon la revendication 1.

**11.** Revêtement antimicrobien selon la revendication 1 qui est un revêtement sur du plastique, du bois, du métal, de la céramique ou un composite plastique-bois.

**12.** polymère ou revêtement antimicrobien selon la revendication 1, qui contient en outre un ou plusieurs composants choisis dans le groupe constitué par d'autrès antimicrobiens, des antioxydants, des stabilisants à la lumière tels que des absorbants d'UV et/ou des amines à empêchement stérique, des phosphites, des phosphonites, des agents

de nucléation, charges, des plastifiants, des pigments, des agents ignifugeants, des agents antistatiques.

**13.** Procécé pour obtenir un polymère ou un revêtement ayant activité antimicrobienne, lequel procédé comprend le fait d’y incorporer une quantité antimicrobienne efficace d’argent élémentaire et d’argent supporté, dans lequel l’argent supporté est supporte sur une zéolithe ou un verre.

**14.** Utilisation d’une combinaison d’argent élémentaire et d’argent supporté, dans laquelle l’argent supporté est supporte sur une zéolithe ou un verre, pour obtenir un polymère ou un revêtement ayant une activité antimicrobienne.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4775585 A
- US 4911898 A
- US 4911899 A
- US 6071542 A
- US 6585989 B
- US 20050233888 A
- US 20060134313 A
- US 6822034 B
- US 6984392 B
- US 5049139 A
- US 5730995 A
- US 6585989 A
- US 2006018943 A
- US 4325863 A
- US 4338244 A
- US 5175312 A
- US 5216052 A
- US 5252643 A
- DE 4316611 A
- DE 4316622 A
- DE 4316876 A
- EP 0589839 A
- EP 0591102 A
- EP 1291384 A
- US 5807932 A
- US 4259467 A
- US 4355147 A
- US 6569536 B
- US 6420038 B
- US 6297291 B
- US 6218466 B
- US 6130272 B
- US 5994461 B
- US 5989719 B
- US 5973030 B
- US 5908888 B
- US 5880199 B
- US 5877256 B
- US 5859094 B
- US 5789084 B
- US 5661210 B
- US 20040235983 A
- US 5973030 A


### Non-patent literature cited in the description


- Handbuch der Kunststoffextrusion, Vol. 1 Grundlagen. 1989, vol. 1, 3-7
- Extrusionsanlagen. 1986, vol. 2
- Ullmann's Encyclopedia of Industrial Chemistry. VCH, 1991, vol. A18, 368-426
- Ullmann's Encyclopedia of Industrial Chemistry. VCH Verlagsgesellschaft, 1991, vol. A18, 469
- Ullmann's Encyclopedia of Industrial Chemistry. VCH, 1991, vol. A18, 429-471
- Ullmann's Encyclopedia of Industrial Chemistry. vol. A18, 451-453
- Ullmann's Encyclopedia of Industrial Chemistry. vol. A18, 491-500
- Ullmann's Encyclopedia of Industrial Chemistry. vol. A18, 438-444
- **BECHERT et al.** *nature medicine,* 2000, vol. 6, 1053